# EUROPÄISCHE PATENTANMELDUNG

(11) **EP 2 055 507 A1**
(43) Veröffentlichungstag der Anmeldung: **06.05.2009**
(21) Anmeldenummer: 08163906.4
(22) Anmeldetag: 09.09.2008
(51) Int. Cl.: B60C 13/02, B60C 15/024

(54) **Fahrzeugluftreifen**

(30) Priorität: 03.11.2007 DE 102007052577
(71) Anmelder: Continental Aktiengesellschaft, 30165 Hannover (DE)
(72) Erfinder: Rittweger, Stefan, 34559, Neuental (DE)
(74) Vertreter: Finger, Karsten

(57) **Zusammenfassung**

Fahrzeugreifen, mit einem Laufstreifen (1), zwei Seitenwänden (8) und zwei Wulstbereichen (5), wobei axial außen wenigstens auf einer Reifenseitenwand in Höhe des Wulstbereiches (5) eine über den Umfang der Reifenseitenwand umlaufende Felgenschutzrippe (11) angeordnet ist, und wobei die Felgenschutzrippe (11) aus einer unteren auf der Reifenaußenwand (8) geschlossen umlaufenden Rippe (12) und aus mehreren oberhalb auf dieser umlaufenden Rippe (12) senkrecht aufstehenden, radial verlaufenden Stegen (13) besteht, und die radial verlaufenden Stege (13) voneinander beabstandet angeordnet sind.

## Beschreibung

Die Erfindung betrifft einen Fahrzeugluftreifen mit einem Laufstreifen, zwei Seitenwänden und zwei Wulstbereichen, wobei axial außen wenigstens auf einer Reifenseitenwand in Höhe des Wulstbereiches eine über den Umfang der Reifenseitenwand umlaufende Felgenschutzrippe angeordnet ist.

Felgenschutzrippen an Fahrzeugluftreifen sind im Stand der Technik bekannt. Die Felgenschutzrippe ist üblicherweise ein Keil aus Gummi, welcher einteilig mit der Seitenwand verbunden ist und auf der Seitenwand ringförmig über den Umfang dieser Seitenwand geschlossen umläuft. Die Felgenschutzrippe ist in einer Reifenquerschnittshöhe auf der unteren Seitenwand in Höhe des Wulstbereiches derart angeordnet, dass diese bei einem auf das Rad aufgezogenen Reifen unmittelbar oberhalb des Felgenhornes verläuft und sich axial zumindest gleich weit wie das Felgenhorn oder axial über das Felgenhorn hinaus erstreckt, um das Felgenhorn und die Felge vor seitlichen Scheuerkontakten, wie beispielsweise Bordsteinkontakten, zu schützen, indem die Felgenschutzrippe diese Kontakte abfängt.

Neben dem Schutz der Felge bietet die Anordnung einer Felgenschutzrippe den weiteren Vorteil, dass der Wulstbereich durch diese zusätzliche umlaufende Rippe versteifbar und dadurch das Handling des Reifens verbesserbar ist. Nachteilig ist, dass durch die Felgenschutzrippe zusätzliches Gummimaterial zur Reifenherstellung benötigt wird, wodurch der Reifen verteuert und das Gewicht des Reifens erhöht ist.

Aus der DE 195 38 011 A1 ist ein Fahrzeugluftreifen mit eine über den Umfang der Reifenseitenwand umlaufende Felgenschutzrippe bekannt geworden, wobei die Felgenschutzrippe an ihrem radial innersten Teil über den Umfang gleichmäßig verteilte Aussparungen aufweist, die der Aufnahme von Auswuchtgewichten am Felgenhorn dienen. Durch die Anorndung der Felgenschutzrippe ist eine erwünschte Versteifung des unteren Seitenwandbereiches ermöglicht. Jedoch ist der Materialaufwand hoch und eine gezielte Einstellung der Versteifung des unteren Seitenwandbereiches nicht möglich.

Es ist die Aufgabe der Erfindung, einen Fahrzeugreifen bereitzustellen, der zum Schutz der Felge eine Felgenschutzrippe aufweist, welche nur wenig Materialaufwand erfordert und mit der eine gezielte Versteifung des unteren Seitenwandbereiches ermöglicht ist.

Die Aufgabe wird gelöst, indem die Felgenschutzrippe aus einer radial unteren auf der Reifenaußenwand umlaufenden Rippe und aus mehreren oberhalb auf dieser umlaufenden Rippe senkrecht aufstehenden, radial verlaufenden Stegen besteht und dass die radial verlaufenden Stege regelmäßig voneinander beabstandet angeordnet sind.

Somit ist eine Felgenschutzrippe geschaffen, die durch ihre radial untere, auf der Reifenseitenwand umlaufenden Rippe die Felge bzw. das Rad durch ihre axiale Breite, welche wenigstens die axiale Breite des Felgenhornes ist, vorzugsweise axial breiter als das Felgenhorn ist, vor Scheuerkontakten schützt. Weiterhin ist durch die Anordnung der radial verlaufenden Stege, welche durch Aussparungen voneinander getrennt sind und senkrecht auf der umlaufenden Rippe aufstehen, Material eingespart und durch die spezielle Verrippung der untere Reifenseitenwandbereich gezielt versteift worden. Durch die versteifenden Wirkung des unteren Seitenwandbereiches können die bekannten Wulstlagen, welche den Wulstbereich verstärken sollen, geringer dimensioniert werden oder zusätzliche Wulstverstärkerlagen können entfallen. Die Konstruktion des Reifen und somit der Reifenaufbau kann vereinfacht werden.

Vorteilhaft ist es, wenn die axial äußeren Oberflächen von umlaufender Rippe und radial verlaufenden Stegen miteinander fluchten. Hierdurch sind unerwünschte Kanten und somit Kerbwirkungen auf der Seitenwand vermieden.

Um eine versteifende Wirkung zu erzielen, ist es vorteilhaft, wenn die radial angeordneten Stege eine Breite von 5mm - 15mm, vorzugsweise von 10 mm aufweisen.

Um Material einzusparen ist es zweckmäßig, wenn die radial angeordneten Stege einen Abstand von 10mm - 30mm, vorzugsweise von 15mm voneinander aufweisen, wobei der Abstand zweier benachbarter Stege der Abstand zwischen einander zugewandter Stegseitenwände zweier benachbarter Stege ist.

Die Stege weisen zur gezielten Versteifung vorteilhafterweise eine axiale Breite (Reliefhöhe) von 1mm bis 5mm auf.

Um den unteren Seitenwandbereich, also den Wulstbereich gezielt verstärken zu können ist es vorteilhaft, wenn die radial angeordneten Stege eine Höhe von 10mm - 30mm aufweisen.

Insbesondere bei Niederquerschnittsreifen, welche eine nur geringe Seitenwandhöhe aufweisen, ist es vorteilhaft, wenn die Felgenschutzrippe eine Breite zwischen 8mm und 14mm aufweist, um Beschriftung und/oder Dekor tragen zu können.

Eine besondere Versteifung der Seitenwand, insbesondere des Wulstbereiches, ist dann ermöglicht, wenn zusätzlich eine über den Umfang der Seitenwand umlaufende Scheuerleiste angeordnet ist, an welcher die Stege mit ihren axial äußeren Oberflächen fluchten. Somit ist eine Versteifung ähnlich eines T-Trägers geschaffen.

Die Dimensionierung und Anordnung der erfindungsgemäßen Felgenschutzrippe ist je nach Reifendimension und zu erzielender Versteifung der Seitenwand auslegbar.

Weitere Merkmale, Vorteile und Einzelheiten der Erfindung werden anhand der Zeichnungen, die schematische Ausführungsbeispiele darstellen, näher erläutert. Es zeigen die:
- Fig.1: eine perspektivische Teilansicht eines erfindungsgemäßen Fahrzeugluftreifens auf einer Felge;
- Fig.2: eine perspektivische Teilansicht eines anderen Fahrzeugluftreifens mit Felgenschutzrippe in Fahrzeugluftreifen-/Felgenanordnung;
- Fig.3: eine perspektivische Teilansicht eines weiteren erfindungsgemäßen Fahrzeugluftreifen mit verbreiterter Felgenschutzrippe, welcher auf einer Felge angeordnet ist.

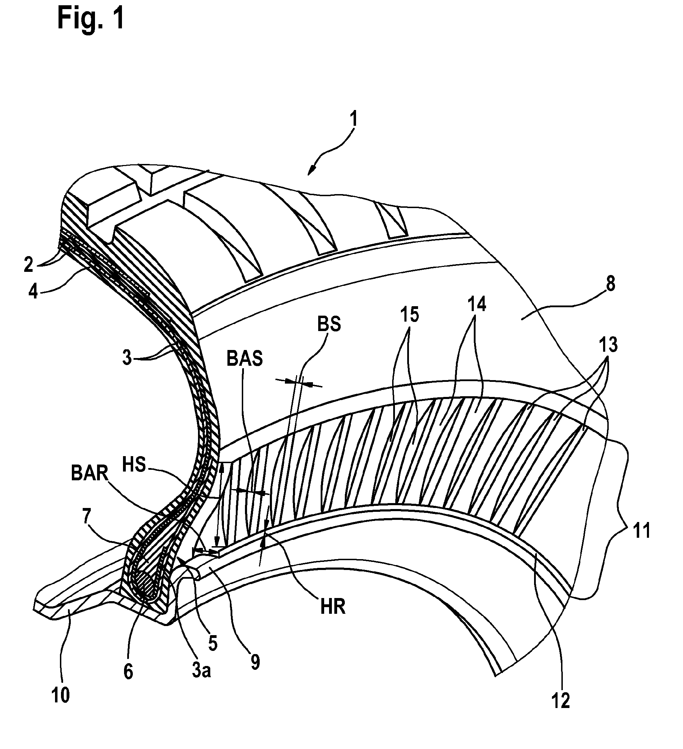

Gemäß dem in **Figur 1** gezeigten perspektivischen Teilquerschnitt durch einen Radialreifen für Personenkraftwagen auf einem Fahrzeugrad, von dem hier das Felgenhorn und der Felgensitz dargestellt sind, sind die wesentlichen Bestandteile, aus welchen sich der dargestellte Radialreifen zusammensetzt: ein profilierter Laufstreifen 1, ein bei der gezeigten Ausführung aus zwei Lagen bestehender Gürtel 2, eine zweilagig ausgeführte Karkasse 3, eine weitgehend luftdicht ausgeführte Innenschicht 4, Wülste 5 mit Wulstkernen 6 und Wulstkernprofilen 7, sowie Seitenwände 8. Die beiden Lagen des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage in kreuzender Anordnung zu den Stahlcorden der zweiten Lage orientiert sind und mit der Reifenumfangsrichtung jeweils einen Winkel zwischen 20° und 35° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material aufweisen. Die Karkasse 3 ist um die Wulstkerne 6 von axial innen nach axial außen geführt, ihre Hochschläge 3a verlaufen neben den Wulstkernprofilen 7 in Richtung Gürtel 2.

Im radial unteren Bereich der Seitenwand 8 auf Höhe des Wulstbereiches 5 ist eine Felgenschutzrippe 11 angeordnet. Die Felgenschutzrippe 11 besteht aus einer radial unteren auf der Reifenaußenwand 8 geschlossen (ohne Durchbrechungen oder Aussparungen) umlaufenden Rippe 12 und aus mehreren oberhalb auf dieser umlaufenden Rippe 12 senkrecht aufstehenden, radial verlaufenden Stegen 13. Die radial verlaufenden Stege 13 sind regelmäßig voneinander beabstandet über den Umfang der Reifenseitenwand 8 angeordnet.

Die radial untere, auf der Reifenseitenwand geschlossen umlaufende Rippe 12 der Felgenschutzrippe 11 weist eine axiale Breite BAR auf, die axial über das Felgenhorn 9 hinausreicht und somit die Felge vor Scheuerkontakten schützt. Die umlaufende Rippe 12 weist eine radiale Höhe HR von 8mm auf. Die radial verlaufenden, auf der umlaufenden Rippe 12 aufstehenden Stege 13 sind regelmäßig über den Umfang der Seitenwand 8 verteilt angeordnet und durch Aussparungen 14 voneinander getrennt. Die axial äußeren Oberflächen von umlaufender Rippe 12 und radial verlaufenden Stegen 13 fluchten miteinander und mit der radial oberen Seitenwand 8 und bilden eine ebene, glatte axial äußere Oberfläche. Die radial angeordneten Stege 13 weisen eine Breite BS von 10 mm auf. Der Abstand zweier Stege 13 zueinander, bzw. die Breite der Aussparung 14, beträgt 15mm, wobei der Abstand zweier benachbarter Stege 13 der Abstand der einander zugewandten Stegseitenwänden 15 zweier benachbarter Stege 13 ist. Die Stege 13 weisen eine Höhe HS von 20mm auf. Jeder Steg 13 hat eine axiale Breite (Reliefhöhe) BAS von 1-5mm.

Durch die versteifenden Wirkung der erfindungsgemäßen Felgenschutzrippe im unteren Seitenwandbereich können die bekannten Wulstlagen, wie z.B. Wulstverstärker, welche den Wulstbereich verstärken sollen, geringer dimensioniert ausgelegt werden oder können ganz entfallen. Die Konstruktion des Reifen und somit der Reifenaufbau sind vereinfacht.

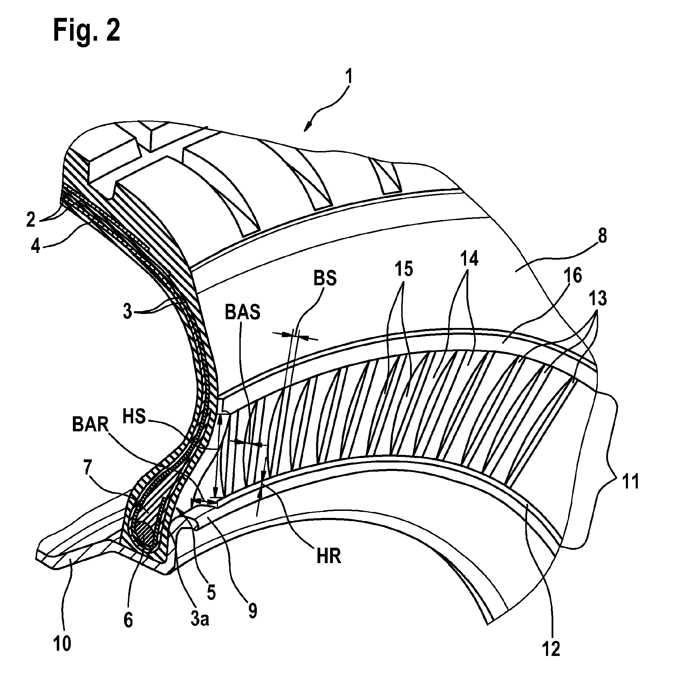

Die **Figur 2** zeigt eine perspektivische Teilansicht eines anderen Fahrzeugluftreifens mit Felgenschutzrippe in Fahrzeugluftreifen-/Felgenanordnung 9,10. Die Figur 2 unterscheidet sich von der Figur 1 dadurch, dass radial oberhalb der Stege 13 zusätzlich eine Scheuerleiste 16 über die Reifenseitenwand 8 geschlossen umlaufend angeordnet ist. Die Stege 13 verlaufen in radialer Richtung und werden in ihrer Erstreckung radial unten durch die in Figur 1 beschriebene umlaufende Rippe 12 begrenzt, während die Stege 13 radial oben durch die Scheuerleiste 16 begrenzt werden. Durch diese Konstruktion ist die Seitenwand 8 besonders versteift. Die Scheuerleiste 16 ist in der dem Fachmann bekannten Weise ausgebildet. In der vorliegenden Ausführungsform fluchten die axial äußeren Oberflächen von Rippe 12, Stege 13 und Scheuerleiste 16 miteinander.

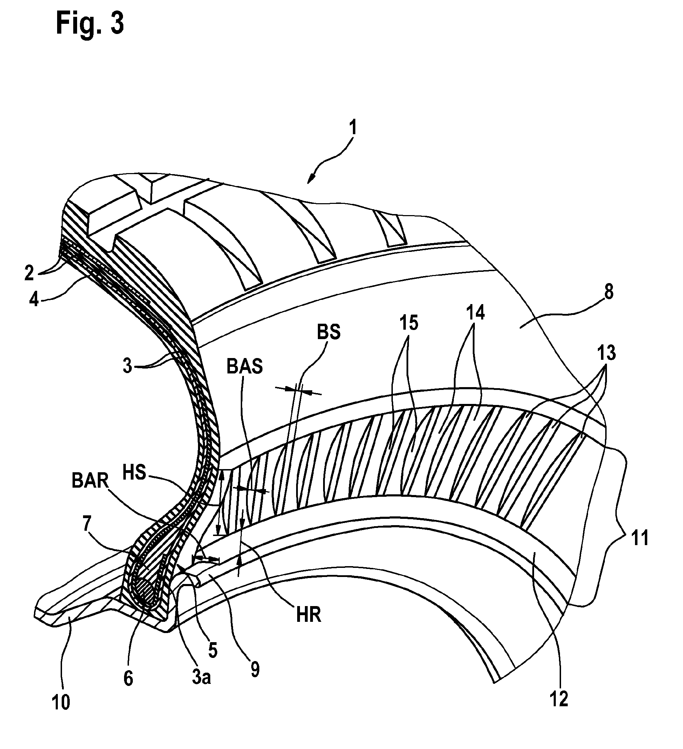

Die **Figur 3** zeigt eine perspektivische Teilansicht eines weiteren Fahrzeugluftreifen, welcher auf einer Felge 9,10 angeordnet ist. Diese Ausführungsform unterscheidet sich von der in der Figur 1 gezeigten Ausführungsform dadurch, dass die Rippe 12 wesentlich höher als in den vorbeschriebenen Ausführungen ist und eine Querschnittshöhe (HR) von 14mm aufweist. Insbesondere bei Niederquerschnittsreifen kann die axial äußere Oberfläche der Felgenschutzrippe Träger von Beschriftung oder Dekor sein.

### Bezugszeichenliste (Teil der Beschreibung)

- 1: Laufstreifen
- 2: Gürtel
- 3: Karkasse
- 3a: Karkasshochschlag
- 4: Innenschicht
- 5: Wulst
- 6: Wulstkern
- 7: Wulstkernprofil
- 8: Seitenwand
- 9: Felgenhorn
- 10: Felgensitz
- 11: Felgenschutzrippe
- 12: Rippe
- 13: Steg
- 14: Aussparung
- 15: Stegseitenwand
- 16: Scheuerleiste

- BS: Breite des Steges
- BAS: Axiale Breite des Steges
- HS: Höhe des Steges
- HR: Höhe der Rippe
- HAR: Axiale Breite der Rippe

## Patentansprüche

1. Fahrzeugreifen,
mit einem Laufstreifen (1), zwei Seitenwänden (8) und zwei Wulstbereichen (5), wobei axial außen wenigstens auf einer Reifenseitenwand in Höhe des Wulstbereiches (5) eine über den Umfang der Reifenseitenwand umlaufende Felgenschutzrippe (11) angeordnet ist,
**dadurch gekennzeichnet, dass**
die Felgenschutzrippe (11) aus einer unteren auf der Reifenaußenwand (8) geschlossen umlaufenden Rippe (12) und
aus mehreren oberhalb auf dieser umlaufenden Rippe (12) senkrecht aufstehenden, radial verlaufenden Stegen (13) besteht und dass die radial verlaufenden Stege (13) voneinander beabstandet angeordnet sind.

2. Fahrzeugluftreifen nach Anspruch 1,
**dadurch gekennzeichnet, dass** die axial äußeren Oberflächen von umlaufender Rippe (12) und radial verlaufenden Stegen (13) miteinander fluchten.

3. Fahrzeugluftreifen nach einem der vorangehenden Ansprüche,
**dadurch gekennzeichnet, dass** die radial angeordneten Stege (13) eine Breite (BS) von 5mm - 15mm, vorzugsweise von 10mm aufweisen.

4. Fahrzeugluftreifen nach einem der vorangehenden Ansprüche,
**dadurch gekennzeichnet, dass** jeder Steg (13) eine axiale Breite (BAS) von 1mm bis 5mm aufweist.

5. Fahrzeugluftreifen nach einem der vorangehenden Ansprüche,
**dadurch gekennzeichnet, dass** die radial angeordneten Stege (13) einen Abstand von 10mm - 20mm, vorzugsweise von 15mm voneinander aufweisen, wobei der Abstand zweier benachbarter Stege der Abstand einander zugewandten Stegseitenwänden (15) zweier benachbarter Stege (13) ist.

6. Fahrzeugluftreifen nach einem der vorangehenden Ansprüche,
**dadurch gekennzeichnet, dass** die radial angeordneten Stege (13) eine Höhe (HS) von 10mm - 30mm aufweisen.

7. Fahrzeugluftreifen nach einem der vorangehenden Ansprüche,
**dadurch gekennzeichnet, dass** die umlaufende Rippe (12) eine Höhe (HR) zwischen 7mm und 16mm, vorzugsweise zwischen 8mm und 14mm aufweist.

8. Fahrzeugluftreifen nach einem der vorangehenden Ansprüche,
**dadurch gekennzeichnet, dass** eine über den Umfang der Seitenwand (8) umlaufende Scheuerleiste (16) angeordnet ist, an welcher die Stege (13) mit ihren axial äußeren Oberflächen fluchten.
